# EUROPÄISCHE PATENTANMELDUNG

(11) **EP 2 270 966 A1**
(43) Veröffentlichungstag der Anmeldung: **05.01.2011**
(21) Anmeldenummer: 09164447.6
(22) Anmeldetag: 02.07.2009
(51) Int. Cl.: H02M 3/335, H02M 7/48

(54) **DC/DC-Wandler mit Hilfswandler zur Erdstromkompensation**

(71) Anmelder: SMA Solar Technology AG, 34266 Niestetal (DE)
(72) Erfinder: Rigbers, Klaus, 34121 Kassel (DE)
(74) Vertreter: Rehberg Hüppe + Partner

(57) **Zusammenfassung**

Bei einem DC/DC-Wandler (5), der eine zwischen Eingangsleitungen (6 und 7) anliegende Eingangsgleichspannung (U_{E}) in eine zwischen Ausgangsleitungen (8 und 9) anliegende Ausgangsgleichspannung (U_{Z}) umwandelt, wobei die Eingangsleitungen (6 und 7) und die Ausgangsleitungen (8 und 9) durch Kapazitäten (Cᵣ₁, Cᵣ₂), die in alle Wechselstromvorwärts-und -rückflusspfaden (13) geschaltet sind, galvanisch voneinander getrennt sind, ist ein Hilfswandler (17) vorgesehen ist, der einen über alle Wechselstromvorwärts- und - rückflusspfade (13) abfließenden Strom kompensiert, indem er einen Kompensationsstrompfad (18), der parallel zu allen Wechselstromvorwärts- und -rückflusspfaden (13) verläuft, über zwei getaktete Schalter (S₇, S₈) wechselweise mit je einer der Eingangsleitungen (6, 7) oder wechselweise mit je einer der Ausgangsleitungen (8 und 9) elektrisch leitend verbindet, wobei der Kompensationsstrompfad (18) auf seiner den getakteten Schaltern (S₇, S₈) gegenüberliegenden Seite über mindestens eine Kapazität (Cₑ) mit einer der Ausgangsleitungen (8, 9) bzw. einer der Eingangsleitungen (6, 7) verbunden ist

## Beschreibung

Die Erfindung betrifft einen DC/DC-Wandler mit den Merkmalen des Oberbegriffs des unabhängigen Patentanspruchs 1.

Soweit in der Definition der Merkmale der vorliegenden Erfindung, wie beispielsweise im Oberbegriff des unabhängigen Patentanspruchs 1, die Angabe "verbindbar" insbesondere in der Form "elektrisch leitend verbindbar" verwendet wird, so verweist diese Angabe nicht auf die triviale Möglichkeit, die im Zusammenhang mit der Angabe bezeichneten Bestandteile des DC/DC-Wandlers auf irgendeine Weise (elektrisch leitend) miteinander zu verbinden. Vielmehr ist mit der Angabe gemeint, dass bei dem DC/DC-Wandler die jeweilige Verbindung bereits angelegt ist und nur noch - beispielsweise durch Schließen eines Schalters oder das elektrisch leitend Werden einer Diode - umgesetzt zu werden braucht, auch wenn dies im Einzelfall nicht explizit zur näheren Erläuterung der "Verbindbarkeit" ausgeführt ist.

Indem die Eingangsleitungen und die Ausgangsleitungen bei einem DC/DC-Wandler mit den Merkmalen des Oberbegriffs des unabhängigen Patentanspruchs 1 auf kapazitive Weise galvanisch voneinander getrennt sind, befasst sich die Erfindung speziell mit solchen DC/DC-Wandler, die auch ohne zwischengeschalteten Transformator eine galvanische Trennung ihrer Ausgangsleitungen von ihren Eingangsleitungen bereitstellen, d. h. mit transformatorlosen DC/DC-Wandler.

Insbesondere kann ein DC/DC-Wandler, auf den sich die vorliegende Erfindung bezieht, Teil einer Gleichspannungs-Eingangsstufe eines Wechselrichters zur Einspeisung elektrischer Energie von einer Gleichstromquelle in ein Wechselstromnetz sein. Insoweit bezieht sich die vorliegende Erfindung auch auf transformatorlose Wechselrichter mit galvanischer Trennung.

Bei der Gleichstromquelle, von der die elektrische Energie kommt, kann es sich insbesondere um eine Photovoltaikanlage, beispielsweise in Form eines einzelnen oder mehrerer zu einem oder mehreren Strings zusammengefassten Photovoltaikmodule handeln. Die Gleichstromquelle kann aber beispielsweise auch ein Kondensator sehr großer Kapazität, ein sogenannter Supercap, ein Gleichspannungsgenerator oder ein Brennstoffzellenstack sein. Das Wechselstromnetz, in das elektrische Energie von der Gleichstromquelle eingespeist wird, kann ein einphasiges oder mehrphasiges, insbesondere dreiphasiges Wechselstromnetz sein. Es kann sich bei dem Wechselstromnetz sowohl um ein öffentliches Stromnetz als auch ein Inselstromnetz als auch jede darüber hinaus denkbare Variante eines Stromnetzes handeln.

Der erfindungsgemäße DC/DC-Wandler ist auch außerhalb der Einspeisung von elektrischer Energie in Wechselstromnetze vielfältig einsetzbar. Auch bei Verwendung bei der Einspeisung von elektrischer Energie in Wechselstromnetze kann er mit vor- und/oder nachgeschalteten, insbesondere hoch- oder tiefsetzstellenden Schaltungen, z. B. in Form eines oder mehrerer weiterer DC/DC-Wandler, kombiniert werden. Ziel kann dabei insbesondere eine erhöhte Bandbreite der Veränderbarkeit des Übersetzungsverhältnisses der Gesamtschaltung sein.

### STAND DER TECHNIK

Ein Wechselrichter zur Einspeisung elektrischer Energie von einer Gleichstromquelle in ein Wechselstromnetz mit einem die Merkmale des Oberbegriffs des unabhängigen Patentanspruchs 1 aufweisenden DC/DC-Wandler ist aus der EP 2 023 475 A1 bekannt. Hier liefert der DC/DC-Wandler wenigstens zwei bipolare Ausgangsgleichspannungen, die zwischen den Eingangsleitungen des Wechselrichters relativ zu einem geerdeten Mittelpunkt additiv überlagert werden. Konkret ist jeder Resonanzkreis verzweigt und weist zwei Teilresonanzkapazitäten auf, die ausgangsseitig jeweils an zwei Gleichrichterdioden angeschlossen sind und über diese wechselweise elektrisch leitend mit den Leitungen eines Teils eines geteilten Zwischenkreises verbunden werden, an den die Wechselrichterbrücke der Wechselrichters angeschlossen ist. Auf diese Weise weist der bekannte Wechselrichter ein Grundübersetzung für die zwischen den Eingangsleitungen des Wechselrichters anliegende Gleichspannung in eine an den Eingangsleitungen der Wechselrichterbrücke anliegende Zwischenkreisgleichspannung von 1: n auf, wobei n die Anzahl der Teilresonanzkapazitäten ist, zu denen die Resonanzkreise insgesamt verzweigt sind. Anders gesagt entspricht n der Anzahl der Teile des geteilten Zwischenkreises, aus dem die Wechselrichterbrücke gespeist wird. Diese Grundübersetzung der Eingangsgleichspannung kann sich als ungünstig erweisen, wenn der bekannte Wechselrichter zur Einspeisung von elektrischer Energie von einem Photovoltaikmodul in ein Wechselstromnetz verwendet werden soll, wenn die von dem Photovoltaikmodul bereitgestellte Gleichspannung bereits größer oder zumindest annähernd so groß ist wie die Scheitelspannung des Wechselstromnetzes. Heute übliche Photovoltaikpaneele stellen zum Teil so hohe Gleichspannungen bereit, dass die Scheitelspannung eines zu speisenden Wechselstromnetzes um ein Mehrfaches überschritten wird.

Bei dem aus der EP 2 023 475 A1 bekannten DC/DC-Wandler weisen nicht alle Ausführungsformen eine galvanische Trennung zwischen den Eingangsleitungen des Wechselrichters, die zugleich die Eingangsleitungen des DC/DC-Wandlers sind, und den Eingangsleitungen der Wechselrichterbrücke, die zugleich die Ausgangsleitungen des DC/DC-Wandlers sind, auf. Bei einigen Ausführungsformen ist vielmehr eine über den Zwischenkreis hinweg gehende Erdung des Mittelpunktes des geteilten Zwischenkreises und einer der Eingangsleitungen des DC/DC-Wandler vorgesehen. In dem Oberbegriff des unabhängigen Patentanspruchs 1 entsprechenden Ausführungsformen des bekannten DC/DC-Wandler ist der Mittelpunkt des geteilten Zwischenkreises, der über Kapazitäten an die Eingangleitungen der Wechselrichterbrücke angeschlossen ist, an einen Mittelpunkt zwischen den Eingangsleitungen des Wechselrichters angeschlossen, der ebenfalls über Kapazitäten an diese Eingangleitungen angeschlossen ist. Über diesen Anschluss wird ein passiver Wechselstromrückflusspfad bereitgestellt, der aufgrund seines rein kapazitiven Anschlusses an die Eingangsleitungen des Wechselrichters die galvanische Trennung zwischen den Eingangsleitungen des Wechselrichters und den Eingangsleitungen der Wechselrichterbrücke nicht beseitigt.

Bei den Ausführungsformen des aus der EP 2 023 475 A1 bekannten Wechselrichters, bei denen die Eingangsleitungen des Wechselrichters von den Eingangsleitungen der Wechselrichterbrücke galvanisch getrennt sind, kann für die Eingangsgleichspannung ein freies Bezugspotential gewählt werden. Dabei besteht aber die Gefahr, dass sich die Stromsumme der über den Resonanzkreis und den passiven Wechselstromrückflusspfad fließenden Ströme nicht zu null ausgleicht und so in unerwünschter Weise auch größere Ausgleichsströme über Erde fließen.

Aus der EP 0 696 841 A1 ist eine Variante eines sogenannten Single-Ended Primary Inductance Converter (SEPIC) mit galvanischer Trennung durch eine zusätzliche Kapazität im Wechselstromrückflusspfad bekannt, die einen weiteren DC/DC-Wandlers mit den Merkmalen des Oberbegriffs des unabhängigen Patentanspruchs 1 darstellt. Auch hier besteht die Gefahr, dass sich die Stromsumme der über den Wechselstromvorwärtsflusspfad und den passiven Wechselstromrückflusspfad fließenden Ströme nicht zu null ausgleicht und so in unerwünschter Weise größere Ausgleichsströme über Erde fließen müssen.

### AUFGABE DER ERFINDUNG

Der Erfindung liegt die Aufgabe zugrunde, einen DC/DC-Wandler mit den Merkmalen des Oberbegriffs des unabhängigen Patentanspruchs 1 so weiter zu entwickeln, dass das Problem auftretender Ausgleichsströme über Erde beseitigt wird.

### LÖSUNG

Die Aufgabe der Erfindung wird durch einen DC/DC-Wandler mit den Merkmalen des Patentanspruchs 1 gelöst. Bevorzugte Ausführungsformen des neuen DC/DC-Wandlers sind in den abhängen Patentansprüchen definiert.

### BESCHREIBUNG DER ERFINDUNG

Um das Problem der Erdströme bei dem neuen DC/DC-Wandler zu beseitigen, wird ein über alle Wechselstromvorwärtsflusspfade und Wechselstromrückflusspfade abfließender Strom, das hießt die nicht ausgeglichene Stromsumme, die sonst über Erde ausgeglichen werden müsste, mit einem Hilfswandler kompensiert, der einen Kompensationsstrompfad, welcher parallel zu allen Wechselstromvorwärtsflusspfaden und allen Wechselstromrückflusspfaden verläuft, über zwei getaktete Schalter wechselweise mit je einer der Eingangsleitungen des DC/DC-Wandlers oder wechselweise mit je einer der beiden Ausgangsleitungen des DC/DC-Wandlers elektrisch leitend verbindet. Der Hilfswandler weist entsprechend eine Schaltbrücke zwischen den Eingangsleitungen oder den Ausgangsleitungen des DC/DC-Wandlers auf.

Auf seiner den getakteten Schaltern gegenüberliegenden Seite ist der Kompensationsstrompfad über mindestens eine Kapazität mit mindestens einer der Ausgangsleitungen oder einer ein dazwischen liegendes Potential führenden Zwischenpotentialleitung bzw. einer der Eingangsleitungen oder einer ein dazwischen liegendes Potential führenden Zwischenpotentialleitung verbunden. Das Potential einer solchen Zwischenpotentialleitung wird gegenüber den Potentialen der Ausgangs- bzw. Eingangsleitungen definiert. Wenn hierfür zwei Kondensatoren verwendet werden, erübrigt sich eine weitere Kapazität in dem Kompensationsstrompfad.

Die Ansteuerung des Hilfswandlers kann in einfacher Weise so erfolgen, dass die insgesamt über alle Wechselstromvorwärtsflusspfade und Wechselstromrückflusspfade fließende Stromsumme gegen null kompensiert wird, was angesichts der Tatsache, dass die über diese Strompfade fließenden Ströme hochfrequent sind, leicht beispielsweise mit einer Induktionsspule überwacht werden kann, in der ein Strom induziert wird, wenn in einem alle Strompfade umschließenden Ringkern als Stromsummenwandler ein magnetisches Wechselfeld induziert wird.

Konkret kann die Steuerung des Hilfswandlers die getakteten Schalter nach dem Prinzip der Pulsweitenmodulation ansteuern, d. h. mit einer festen Frequenz für unterschiedliche Zeiträume schließen. Der Algorithmus, nach dem die Steuerung die Stromsumme gegen null kompensiert, kann durch einen Regler definiert werden, der zumindest ein Proportionalglied aufweist. Zusätzlich kann der Regler resonant sein, und er kann ein zusätzliches Integral- und/oder Differentialglied aufweisen. Umgesetzt sein kann der Regler digital in Form eines Mikrocontrollers, Mikroprozessors, programmierbaren Bausteins und/oder eines sogenannten ASIC. Es ist aber auch möglich, den Regler analog unter Verwendung von Operationsverstärkern aufzubauen.

In dem Kompensationsstrompfad kann neben der Kapazität auch eine Induktivität vorgesehen sein, um die passiven Eigenschaften des Kompensationspfads abzustimmen. Eine derartige Induktivität liegt vorzugsweise auf der Seite der Kapazität, die den Schaltern des Hilfswandlers zugewandt ist.

Zusätzlich kann der Kompensationsstrompfad zur Abstimmung seiner passiven Eigenschaften auf der Seite mit den getakteten Schaltern über eine Kopplungskapazität mit einer der Eingangsleitungen bzw. einer der Ausgangsleitungen des DC/DC-Wandlers verbunden sein. Die Kopplungskapazität wird zwischen der Induktivität und der Kapazität an den Kompensationsstrompfad angeschlossen.

Auf der den getakteten Schaltern gegenüberliegenden Seite ist der Kompensationsstrompfad mit einer der Ausgangsleitungen bzw. einer der Ausgangsleitungen des DC/DC-Wandlers verbunden.

Der erfindungsgemäße Hilfswandler kann zur Erdstromkompensation bei grundsätzlich allen DC/DC-Wandlern mit galvanischer Trennung zur Anwendung kommen. Bevorzugt ist sein Einsatz bei solchen DC/DC-Wandlern, bei denen die galvanische Trennung auf kapazitive Weise bewirkt ist. Hierzu zählen die aus der EP 0 696 841 A1 bekannte SEPIC-Variante und alle Ausführungsformen des aus der EP 2 023 475 A1 bekannten DC/DC-Wandler mit galvanischer Trennung.

Insbesondere kann der neue DC/DC-Wandler als Wechselstromvorwärtspfad mindestens einen eine Resonanzinduktivität und eine Resonanzkapazität aufweisenden Resonanzkreis umfassen, der eingangsseitig über mindestens zwei getaktete Schalter jeweils mit einer der beiden Eingangsleitungen elektrisch leitend verbindbar ist.

Dieser Resonanzkreis ist abweichend von der Lehre der EP 2 023 475 A1 vorzugsweise ungeteilt, d. h. wechselweise direkt mit den beiden Eingangsleitungen einer nachgeschalteten Wechselrichterbrücke elektrisch leitend verbindbar. Dies ist gleichbedeutend damit, dass auch der Zwischenkreis des neuen DC/DC-Wandlers ungeteilt ist und dass die Grundübersetzung des neuen DC/DC-Wandlers - abgesehen von der Möglichkeit, Hochsetzsteller vorzusehen - maximal 1 : 1 beträgt. Er ist damit insbesondere für Gleichstromquellen geeignet, die eine hohe Eingangsgleichspannung bereitstellen. Bei dem neuen DC/DC-Wandler ist auch das Bezugspotential für die Ausgangsgleichspannung frei wählbar. Die Ausgangsgleichspannung wird insbesondere nicht zwangsweise gegenüber einem geerdeten Mittelpunkt bereitgestellt.

Wenn der Resonanzkreis ungeteilt ist, bedeutet dies hier nicht, dass die Resonanzkapazität nicht durch zwei oder mehr einzelne Kondensatoren bereitgestellt werden darf, die in Reihe und/oder auch parallel geschaltet sind, solange eine am Ausgang des Resonanzkreises vorgesehene Gesamtkapazität ungeteilt ist, das heißt der Resonanzkreis nicht mehrere getrennte Ausgänge mit mehreren Teilkapazitäten aufweist. Bei dem neuen DC/DC-Wandler kann die Reihenfolge der Resonanzinduktivität und der Resonanzkapazität auch umgekehrt sein, so dass die Resonanzkapazität am Eingang und die Resonanzinduktivität am Ausgang des Resonanzkreises liegt. Auch wenn diese umgekehrte Rolle in den folgenden konkreten Ausführungsbeispielen keine Berücksichtigung findet, ist sie der dort gezeigten Reihenfolge gleichwertig.

Bei dem neuen DC/DC-Wandler ist eine Kaskadierung des in den beiden letzten Absätzen beschriebenen Grundprinzips möglich, indem mehrere Resonanzkreise ausgangsseitig parallel zueinander an die dieselben Ausgangsleitungen angeschlossen werden. Eingangsseitig sind diese Resonanzkreise dann an maximal eine der beiden Eingangsleitungen des DC/DC-Wandlers und eine oder zwei jeweils ein dazwischen liegendes Potential führende Zwischenpotentialeingangsleitungen über je einen getakteten Schalter angeschlossen. Ab dem dritten Resonanzkreis gibt es mindesten einen, der eingangsseitig über seine beiden getakteten Schalter wechselweise mit zwei Zwischenpotentialeingangsleitungen elektrisch leitend verbindbar ist. Auch jeder solche Resonanzkreis ist ausgangsseitig wechselweise mit den beiden Ausgangsleitungen elektrisch leitend verbindbar. Diese Kaskadierung kann als Umkehrung der aus der EP 2 023 475 A1 bekannten Kaskadierung interpretiert werden.

Bei dem neuen DC/DC-Wandler kann die Resonanzkapazität am Ausgang des Resonanzkreises über je eine Gleichrichterdiode an die beiden Ausgangsleitungen oder ein dazwischen liegendes Potential führende Zwischenpotentialausgangsleitungen angeschlossen sein, wobei sich eine elektrisch leitende Verbindung je nach Richtung der Potentialdifferenz über die Gleichrichterdioden passiv einstellt. Eine bessere Regelbarkeit des neuen DC/DC-Wandlers ergibt sich, wenn die Resonanzkapazität am Ausgang des Resonanzkreises wechselweise über getaktete Schalter mit den Ausgangsleitungen oder ein dazwischen liegendes Potential führende Zwischenpotentialausgangsleitungen elektrisch leitend verbindbar ist. Diesen getakteten Schaltern können Freilaufdioden parallel geschaltet sein.

Der Wechselstromrückflusspfad des neuen DC/DC-Wandlers mit Resonanzkreis kann eingangsseitig mit den Eingangsleitungen des DC/DC-Wandlers oder den Zwischenpotentialeingangsleitungen und ausgangsseitig mit den Ausgangsleitungen des DC/DC-Wandlers oder den Zwischenpotentialausgangsleitungen elektrisch leitend verbunden oder verbindbar sein. Über diesen Wechselstromrückflusspfad können sich die über den DC/DC-Wandler fließenden Ströme bereits zum großen Teil kompensieren. Dabei ist es von grundsätzlicher Bedeutung, das heißt, zum Beispiel auch bei einem geteilten Zwischenkreis nach dem Stand der Technik von Vorteil, wenn in dem Wechselstromrückflusspfad zwischen seinen Verzweigungen zu den Eingangsleitungen des DC/DC-Wandlers einerseits und den Ausgangsleitungen des DC/DC-Wandlers andererseits eine Kapazität vorgesehen ist, die die beiden genannten Verzweigungen galvanisch voneinander trennt. Diese Kapazität stellt die galvanische Trennung unabhängig davon bereit, wie die Verzweigungen des Wechselstromrückflusspfads zu den Leitungen an seiner Eingangsseite und seiner Ausgangsseite im Einzelnen ausgebildet sind.

Vorzugsweise ist bei dem neuen DC/DC-Wandler mit mehreren Resonanzkreisen jedem Resonanzkreis ein Wechselstromrückflusspfad zugeordnet, um den über den Resonanzkreis abfließenden Strom möglichst vollständig zurückzuführen. Jeder dieser Resonanzkreise ist eingangsseitig und ausgangsseitig mit denselben Leitungen elektrisch leitend verbunden oder verbindbar, mit denen der zugehörige Resonanzkreis elektrisch leitend verbindbar ist.

Zwar kann der Wechselstromrückflusspfad eingangsseitig mit den Eingangsleitungen oder den Zwischenpotentialeingangsleitungen und ausgangsseitig mit den Ausgangsleitungen oder den Zwischenpotentialausgangsleitungen jeweils über zwei Kapazitäten verbunden sein. Auf diese Weise wird ein vollkommen passiver Wechselstromrückflusspfad bereitgestellt. Dabei können mehrere derartige Wechselstromrückflusspfade ausgangsseitig über dieselben zwei Kapazitäten mit den Ausgangsleitungen verbunden sein.

Bevorzugt ist es bei dem neuen DC/DC-Wandler aber, den Wechselstromrückflusspfad ebenso wie den Resonanzkreis aktiv auszubilden, indem er zumindest eingangsseitig oder ausgangsseitig über zwei Schalter an die Eingangsleitungen oder die Zwischenpotentialeingangsleitungen bzw. die Ausgangsleitungen oder die Zwischenpotentialausgangsleitungen angeschlossen ist, um weitere Möglichkeiten zur Beeinflussung der Ausgangsgleichspannung und des über den DC/DC-Wandler fließenden Stroms zu haben. Auf der jeweils anderen Seite kann der Wechselstromrückflusspfad ebenfalls über Schalter oder auch nur über Gleichrichterdioden an die Ausgangsleitungen oder die Zwischenpotentialausgangsleitungen bzw. die Eingangsleitungen oder die Zwischenpotentialeingangsleitungen angeschlossen sein. Soweit hier eingangseitig oder ausgangsseitig Schalter vorgesehen sind, können diesen Freilaufdioden parallel geschaltet sein. Indem die galvanische Entkopplung bei einem erfindungsgemäßen Wechselstromrückflusspfad bereits durch die zwischen seinen eingangs- und ausgangsseitigen Verzweigungen angeordnete Kapazität bewirkt wird, können die eingangs- und ausgangsseitigen Anbindungen des Wechselstromrückflusspfads von der Aufgabe der galvanischen Entkopplung frei ausgestaltet werden.

Ganz besonders bevorzugt ist es bei dem neuen DC/DC-Wandler, wenn in dem Wechselstromrückflusspfad zwischen seiner eingangsseitigen Verzweigung zu den Eingangsleitungen oder den Zwischenpotentialeingangsleitungen und seiner ausgangsseitigen Verzweigung zu den Ausgangsleitungen oder den Zwischenpotentialausgangsleitungen nicht nur eine Kapazität sondern auch eine Resonanzinduktivität vorgesehen ist, so dass der Wechselstromrückflusspfad als weiterer Resonanzkreis ausgebildet ist. Dieser weitere Resonanzkreis kann grundsätzlich dieselben Kenngrößen wie der zugehörige Resonanzkreis aufweisen. Auch bei dem Resonanzkreis ist die Reihenfolge der Kapazität und der Resonanzinduktivität ohne eigene Bedeutung; sie kann insbesondere auch unabhängig von der Reihenfolge der Resonanzkapazität und der Resonanzinduktivität in dem zu dem jeweiligen Wechselstromrückflusspfad zugehörigen Resonanzkreis gewählt werden.

Zusätzliche Regelmöglichkeiten in Bezug auf die Ausgangsgleichspannung weist der neue DC/DC-Wandler dann auf, wenn zwischen jedem Resonanzkreis und dem ihm zugeordneten Wechselstromrückflusspfad eingangsseitig nach ihrer Verzweigung zu den beiden Eingangsleitungen oder den Zwischenpotentialeingangsleitungen und/oder ausgangsseitig vor ihrer Verzweigung zu den beiden Ausgangsleitungen oder den Zwischenpotentialausgangsleitungen mindestens ein getakteter Verbindungsschalter vorgesehen ist. Dabei wirkt sich eine Betätigung eines derartigen eingangsseitigen Verbindungsschalters tiefsetzstellend und eine Betätigung eines derartigen ausgangsseitigen Verbindungsschalters hochsetzstellend aus. Statt jeweils nur eines Verbindungsschalters können zum Beispiel auch zwei eingangsseitig und/oder ausgangsseitig in Reihe geschaltete Verbindungsschalter vorgesehen werden, deren Mittelpunkt mit einem Zwischenpotential verbunden ist, das durch zwischen die Eingangsleitungen bzw. die Ausgangsleitungen des DC/DC-Wandlers in Reihe geschaltete Kapazitäten definiert ist. Dann sind die Ein- bzw. Ausgänge des Resonanzkreises und dem ihm zugeordneten Wechselstromrückflusspfads nicht nur miteinander sondern auch einzeln mit diesem Zwischenpotential verbindbar.

Auf die Eigenschaften des neuen DC/DC-Wandlers kann auch dadurch positiv Einfluss genommen werden, dass jeder Resonanzkreis und der zugehörige Wechselstromrückflusspfad ausgangsseitig vor ihrer Verzweigung zu den beiden Ausgangsleitungen oder den Zwischenpotentialausgangsleitungen über eine Kapazität und/oder Induktivität miteinander verbunden sind.

In einer besonderen Ausführungsform des neuen DC/DC-Wandlers sind jeder Resonanzkreis und der zugehörige Wechselstromrückflusspfad eingangsseitig über zwei getaktete Schalter jeweils mit einer der beiden Eingangsleitungen oder einer ein dazwischen liegendes Potential führenden Zwischenpotentialeingangsleitung elektrisch leitend verbindbar, wobei in einer der Eingangsleitungen oder Zwischenpotentialeingangsleitungen ein weiterer getakteter Schalter vorgesehen ist. Auf diese Weise wird am Eingang des neuen DC/DC-Wandlers eine sogenannte H5-Schaltung realisiert. Eine solche H5-Schaltung kann auch im Bereich einer nachgeschalteten Wechselrichterbrücke vorgesehen sein. Ebenso können andere bekannte Schaltungskonzepte bei dem DC/DC-Wandler und der Wechselrichterbrücke Anwendung finden. So kann der DC/DC-Wandler beispielsweise ein Drei-Level NPC (Neutral Point Clamped) Converter sein. Andere anwendbare Schaltungsprinzipien sind unter den Stichworten "Heric" und "Flying Capacitor" bekannt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird Im Folgenden anhand verschiedener Ausführungsbeispiele des neuen DC/DC-Wandlers näher erläutert und beschrieben.
- **Fig. 1**: skizziert einen transformatorlosen Wechselrichter mit einer ersten Ausführungsform des neuen DC/DC-Wandlers;
- **Fig. 2**: skizziert einen transformatorlosen Wechselrichter, der gegenüber Fig. 1 durch eine zweite Ausführungsform des neuen DC/DC-Wandlers abgewandelt ist.
- **Fig. 3**: skizziert einen weiteren transformatorlosen Wechselrichter mit einer Ausführungsform des neuen DC/DC-Wandlers als SEPIC.
- **Fig. 4**: skizziert eine alternative Ausführungsform des Kompensationsstrompfads des Wechselrichters gemäß Fig. 1; und
- **Fig. 5**: skizziert noch eine weitere alternative Ausführungsform des Kompensations- strompfads des Wechselrichters gemäß Fig. 1.

### FIGURENBESCHREIBUNG

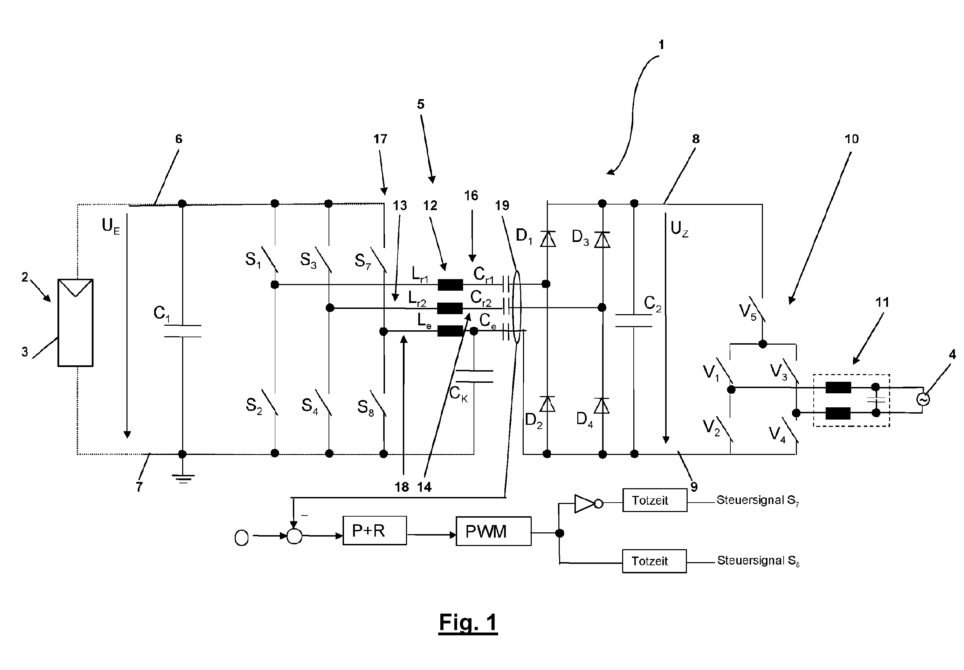

Der in **Fig. 1** skizzierte Wechselrichter 1 dient zum Einspeisen von elektrischer Energie von einer Gleichstromquelle 2, vorzugsweise einer Photovoltaikanlage 3, in ein hier einphasiges Wechselstromnetz 4. Der Wechselrichter 1 weist einen DC/DC-Wandler 5 auf, der eine zwischen Eingangsleitungen 6 und 7 anliegende Eingangsgleichspannung U_{E} in eine Ausgangsgleichspannung U_{Z} umwandelt. Die Ausgangsgleichspannung U_{Z} liegt zwischen Ausgangsleitungen 8 und 9 an, die zugleich Eingangsleitungen einer Wechselrichterbrücke 10 des Wechselrichters 1 sind, welche unter Zwischenschaltung eines Sinusfilters 11 Wechselstrom in das Wechselstromnetz 4 einspeist. Dabei richtet die Wechselrichterbrücke 10 die Ausgangsgleichspannung U_{Z}, die zugleich Zwischenkreisgleichspannung ist, in eine Ausgangswechselspannung um. Die Wechselrichterbrücke 10 ist hier als H5-Schaltung ausgebildet und weist insgesamt fünf getaktete Schalter V₁ bis V₅ auf, die in grundsätzlich bekannter Weise angesteuert werden, um ausgehend von der Ausgangsgleichspannung U_{Z} elektrische Energie in das Wechselstromnetz 4 einzuspeisen. Der DC/DC-Wandler 5 weist einen Resonanzkreis 12 mit einer Resonanzinduktivität Lᵣ₁ und einer Resonanzkapazität Cᵣ₁ auf. Eingangsseitig wird dieser Resonanzkreis 12 über zwei getaktete Schalter S₁ und S₂, denen Freilaufdioden parallel geschaltet werden können, wechselweise mit den Eingangsleitungen 6 und 7 des Wechselrichters 1 elektrisch leitend verbunden. Ausgangsseitig erfolgt eine wechselweise elektrisch leitende Verbindung des Resonanzkreises 12 mit den Eingangsleitungen 8 und 9 der Wechselrichterbrücke 10 über Gleichrichterdioden D₁ und D₂-Parallel, vielleicht genauer gesagt antiparallel zu dem Resonanzkreis 12 ist ein Wechselstromrückflusspfad 13 vorgesehen, der an dieselben Leitungen 6 und 7 einerseits sowie 8 und 9 andererseits angeschlossen ist wie der Resonanzkreis 12, und der es dem über den Resonanzkreis 12 abfließenden Strom erlaubt, zu der Gleichstromquelle 2 zurückzufließen. Dabei ist in dem Wechselstromrückflusspfad 13 eine Kapazität Cᵣ₂ vorgesehen, die zusammen mit der Resonanzkapazität Cᵣ₁ für eine vollständige galvanische Trennung zwischen den Eingangsleitungen 6 und 7 des Wechselrichters 1 und den Eingangsleitungen 8 und 9 der Wechselrichterbrücke 10 sorgt. Weiterhin ist hier in dem Wechselstromrückflusspfad 13 eine Resonanzinduktivität Lᵣ₂ vorgesehen, die den Wechselstromrückflusspfad 13 als weiteren Resonanzkreis 14 ausgestaltet. Eingangsseitig ist der Wechselstromrückflusspfad 13 hier über zwei weitere getaktete Schalter S₃ und S₄, denen ebenfalls Freilaufdioden parallel geschaltet werden können, an die Eingangsleitungen 6 und 7 angeschlossen. Ausgangsseitig ist der Wechselstromrückflusspfad 13 über Gleichrichterdioden D₃ und D₄ an die Eingangsleitungen 8 und 9 der Wechselrichterbrücke 10 angeschlossen. Damit ist der Wechselstromrückflusspfad 13 genauso ausgebildet wie der Resonanzkreis 12. Mit den Schaltern S₁ und S₂ bzw. S₃ und S₄ werden diese beiden Resonanzkreise 12 und 14 zu gegenphasigen Schwingungen gezwungen. Indem auch der Wechselstromrückflusspfad hier zumindest einseitig durch getaktete Schalter S₃ und S₄ an die Eingangsleitungen 6 und 7 angebunden ist, besteht eine zusätzliche Möglichkeit zur Einflussnahme auf den insgesamt über den Resonanzkreis 12 und den Wechselstromrückflusspfad 13 fließenden Strom. Zwischen den Eingangsleitungen 6 und 7 und den Eingangsleitungen 8 und 9 sind Pufferkapazitäten C₁ bzw. C₂ vorgesehen.

Die Grundübersetzung des Wechselrichters 1 zwischen der Eingangsgleichspannung U_{E} und der Ausgangsgleichspannung U_{Z} liegt bei 1 : 1. Durch ein getaktetes miteinander Verbinden des Resonanzkreises 12 und des Wechselstromrückflusspfads 13 von der Gleichstromquelle 2 aus gesehen hinter ihrer Verzweigung zu den Eingangsleitungen 6 und 7 über die Schalter S₁ und S₂ bzw. die Schalter S₃ und S₄ mittels eines hier nicht dargestellten Schalters kann auf die Zwischenkreiswechselspannung U_{Z} tiefsetzstellend eingewirkt werden, um neben der Ansteuerung der Schalter S₁ und S₂ sowie S₃ und S₄ relativ zu der Resonanzfrequenz des Resonanzkreises 12 eine weitere Anpassungsmöglichkeit des Wechselrichters 1 an die von der Gleichstromquelle 12 generierte Eingangsgleichspannung U_{E} zu schaffen. Durch einen hier ebenfalls nicht dargestellten getakteten Schalter, mit dem der Resonanzkreis 12 und der Wechselstromrückflusspfad 13 vor ihrer ausgangsseitigen Verzweigung zu den Eingangsleitungen 8 und 9 miteinander elektrisch leitend verbindbar sind, kann demgegenüber hochsetzstellend auf die Ausgangsgleichspannung U_{Z} eingewirkt werden. Statt eines solchen ausgangsseitigen Schalter dem Resonanzkreis 12 und dem Wechselstromrückflusspfaden 13 kann an dieser Stelle eine Verbindung über eine zusätzliche Reihenschaltung aus Kapazität und Induktivität vorgesehen sein, die die passiven Eigenschaften des DC/DC-Wandlers 5 positiv beeinflusst. Statt hier sowohl eine Kapazität als auch eine Induktivität vorzusehen, kann auch nur eine Kapazität oder nur eine Induktivität vorgesehen werden. In diesem Zusammenhang ist zu betonen, dass auch die Resonanzinduktivität Lᵣ₂ in dem Wechselstromrückflusspfad 13 grundsätzlich optional sind. Weiterhin können die Schalter S₁ bis S₄ nach Art einer H5-Schaltung um einen weiteren Schalter in einer der Eingangsleitungen 6 und 7 ergänzt werden, der ebenfalls tiefsetzstellend für die Ausgangsgleichspannung U_{Z} getaktet werden kann. Insgesamt weist daher bereits die Ausführungsform des Wechselrichters 1 gemäß Fig. 1 ein Vielzahl von Möglichkeiten der Einflussnahme auf die Ausgangsgleichspannung U_{Z} auf.

Zusätzlich kann der DC/DC-Wandler 5 zwei oder mehr Resonanzkreise 12 aufweisen, die als solche identisch aus Resonanzinduktivitäten Lᵣ₁ und Resonanzkapazitäten Cᵣ₁ ausgebildet sind und parallel zueinander z. B. über Gleichrichterdioden D₁ und D₂ an die Ausgangsleitungen 8 und 9 angeschlossen sind. Auch den einzelnen Resonanzkreisen 12 dann jeweils zugeordnete Wechselstromrückflusspfade 13 können ausgangsseitig, das heißt zu den Ausgangsleitungen 8 und 9 zueinander parallel geschaltet. Sie könne hier aber auch zusammen geschlossen und über gemeinsame Kapazitäten an die Ausgangsleitung angeschlossen sein. Eingangsseitig sind die Resonanzkreise 12 und die zugehörigen Wechselstromrückflusspfade 13 jedoch vorzugsweise nicht an beide Eingangsleitungen 6 und 7 des Wechselrichters 1, sondern über Schalter S₁ und S₂ jeweils maximal an eine der beiden Eingangsleitungen 6 und 7 und an eine ein zwischen den Eingangsleitungen 6 und 7 liegendes Potential führende Zwischenpotentialeingangsleitung angeschlossen. An einer solchen Zwischenpotentialeingangsleitung liegt ein durch Kapazitäten definiertes Zwischenpotential an. Entsprechend weist der Wechselrichter 1 dann eine Grunduntersetzung von n : 1 auf, wobei n die Anzahl der parallel geschalteten Resonanzkreise 12 ist.

Als Merkmal des neuen DC/DC-Wandlers 5 ist hier ein Hilfswandler 17 vorgesehen, um eine über den Resonanzkreis 12 und den Wechselstromrückflusspfad 13 fließende Stromsumme zu kompensieren, damit diese keinen Strom über Erde provoziert. Der Hilfswandler weist hier zwei getaktete Schalter S₇ und S₈ auf, mit denen ein Kompensationsstrompfad 18 eingangsseitig wechselweise mit den Eingangsleitungen 6 und 7 verbunden wird. Der Kompensationsstrompfad 18 verläuft parallel zu dem Resonanzkreis 12 und dem Wechselstromrückflusspfad 13. In ihm ist eine Kapazität Cₑ angeordnet, über die er hier an die Eingangsleitung 9 der Wechselrichterbrücke 10 angeschlossen ist. Zusätzlich ist der Wechselstromrückflusspfad 18 über eine Kopplungskapazität C_{K} an die hier geerdete Eingangsleitung 7 angeschlossen, und in ihm ist zwischen den Kapazitäten Cₑ und C_{K} einerseits und den Schaltern S₇ und S₈ andererseits eine Induktivität Lₑ vorgesehen. Durch die Kapazitäten Cₑ und C_{K} wir die galvanische Trennung auch längs des Kompensationsstrompfads 18 sichergestellt. Eine Steuerung 20 für die Ansteuerung der getakteten Schalter S₇ und S₈ des Hilfswandlers 17 regelt die über den DC/DC-Wandler 5 fließende Stromsumme auf null. Mit einem Ringkern 19 und einer hier nicht dargestellte Induktionsspule als Summenstromwandler wird ein Eingangssignal für die Steuerung 20 generiert.

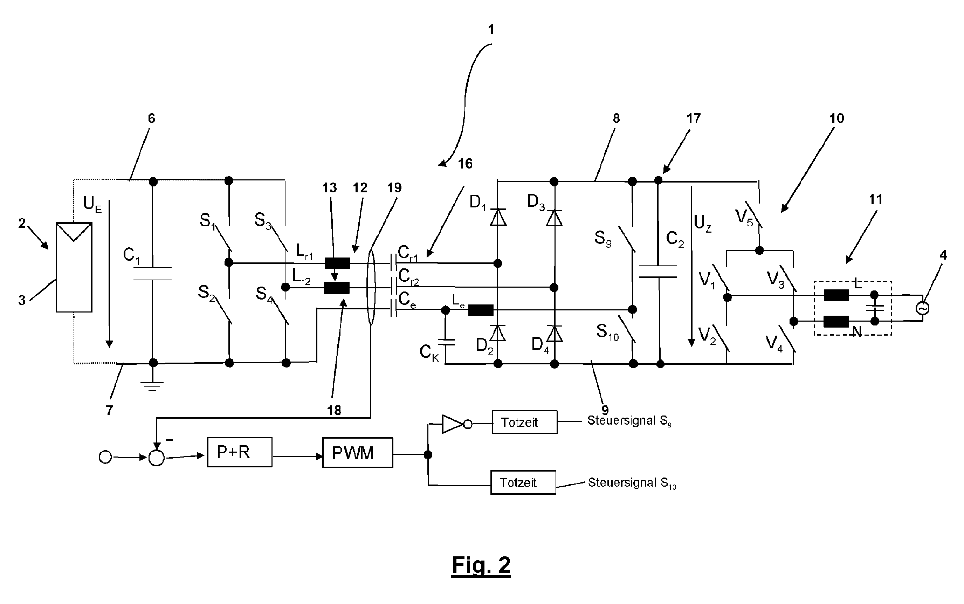

Bei der Ausführungsform des Wechselrichters 1 gemäß **Fig. 2** ist anders als in Fig. 1 der Kompensationsstrompfad 18 mit dem Hilfswandler 17 über getaktete Schalter S₉ und S₁₀ an die Eingangsleitungen 8 und 9 der Wechselrichterbrücke 10 angeschlossen. Entsprechend weist er die Induktivität Lₑ ausgangsseitig der Kapazität Cₑ auf, und auch die Kopplungskapazität C_{K} ist zu der Eingangsleitung 9 der Wechselrichterbrücke 10 hin vorgesehen. Unmittelbar verbunden ist der Kompensationsstrompfad 18 hier mit der Eingangsleitung 7. Die Steuerung 20 für die Schalter S₉ und S₁₀ entspricht aber im Wesentlichen der Steuerung 20 für Schalter S₇ und S₈ gemäß Fig. 8, wobei auch hier nur eine von mehreren Möglichkeiten zur Ausführung der Steuerung 20 skizziert ist. Wenn mehrere Resonanzkreise 12 und zugehörige Wechselstromrückflusspfade 13 parallel geschaltet sind, ist vorzugsweise nur ein einziger Hilfswandler 17 und ein einziger Kompensationsstrompfad 18 vorgesehen, obwohl grundsätzlich auch je Paar aus Resonanzstromkreis 12 und zugehörigem Wechselstromrückflusspfad 13 eine solcher Kombination aus Hilfswandler 17 und Kompensationsstrompfad 18 vorgesehen werden könnte, um jede der über ein solches Paar fließenden Teilstromsummen auf null zu kompensieren.

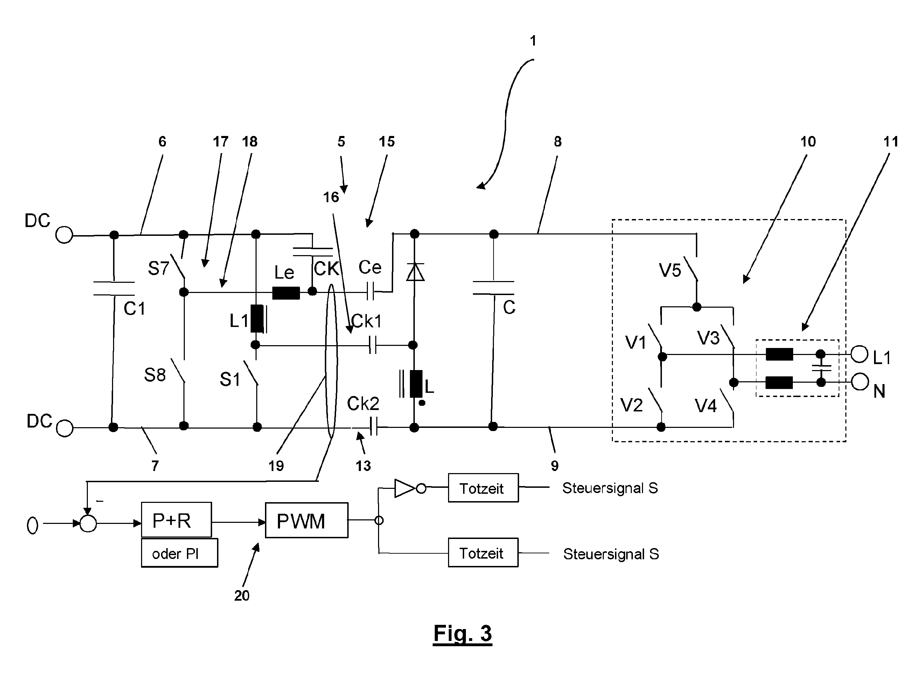

**Fig. 3** skizziert einen Wechselrichter 1, ohne dass hier die Gleichstromquelle 2 wie in den Fig. 1 und 2 wiedergegeben ist. bezeichnet sind hier nur die Eingangspole DC⁺ und DC⁻. Dasselbe gilt für das Wechselstromnetz 4, für das die Anschlüsse L₁ und N stehen. Der DC/DC-Wandler 5 ist hier als SEPIC 15 vorgesehen, der im wesentlichen aus einer eingangsseitigen Kombination, aus einer Induktivität L₁ und einem Schalter S₁, einem Kopplungskondensator Cₖ₁ und einer ausgangsseitigen Induktivität L₂ N₃ mit einer Diode D₁ aufgebaut ist. Als erste Besonderheit ist hier gemäß der Lehre der EP 0 696 841 A1 nicht nur in dem Wechselstromvorwärtspfad 16 die Kopplungskapazität Cₖ₁ vorgesehen, sondern auch in dem Wechselstromrückflusspfad 13 eine Kopplungskapazität Cₖ₂. So wird auf kapazitive Weise eine galvanische Trennung zwischen den Eingangsleitungen 6 und 7 und den Ausgangsleitungen 8 und 9 dieses DC/DC-Wandlers 5 erreicht. Dabei ist auch hier ein Hilfswandler 17 vorgesehen, der grundsätzlich denselben Aufbau aufweist wie der Hilfswandler 17 gemäß Fig. 1, auch wenn hier die Kopplungskapazität Cₖ an die Eingangsleitung 6 und die Kapazität Cₑ an die Ausgangsleitung 8 angeschlossen ist. Auf die grundsätzliche Funktion des Hilfswandlers 4 zur Erdstromkompensation, in den die über den Ferritring 19 registrierte Strom durch Ansteuerung der Schalter S₇ und S₈ zu Null gemacht wird, hat dies keine Auswirkungen.

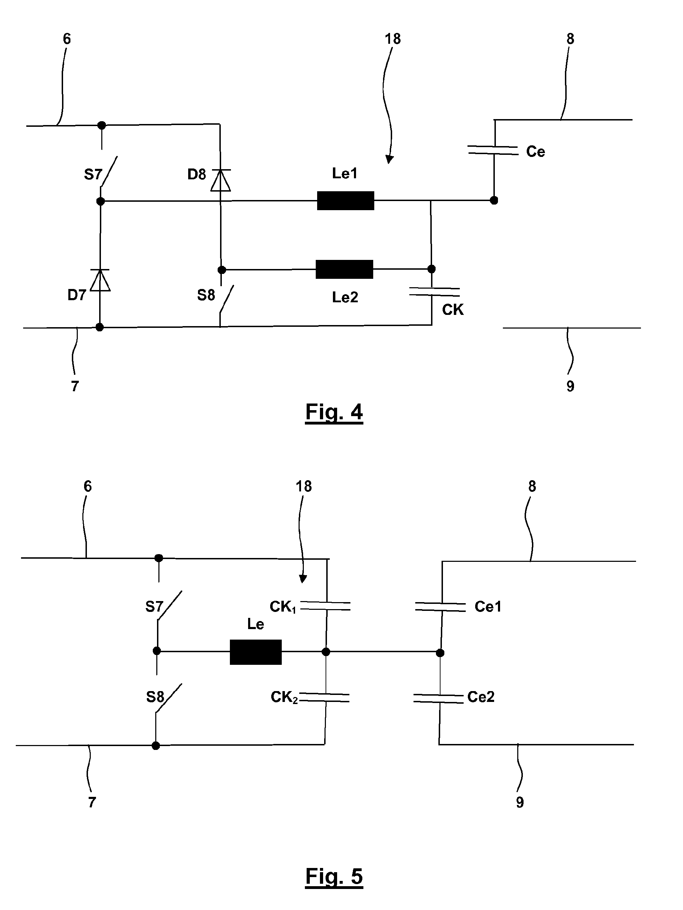

Bei dem in **Fig. 4** separat, d. h. ohne die weiteren Bestandteile des Wechselrichters außer den Eingangsleitungen 6 und 7 und den Ausgangsleitungen 8 und 9 skizzierten Kompensationsstrompfad 18 ist die Schaltbrücke zwischen den Eingangsleitungen 6 und 7 auf zwei Brücken aus jeweils einem der Schalter S₇ und S₈ und einer Diode D₇ bzw. D₈ aufgeteilt. Entsprechend ist die Induktivität Lₑ in zwei Teilinduktivitäten Lₑ₁ und Lₑ₂ aufgeteilt. Alle anderen Komponenten des Kompensationsstrompfads 18 entsprechen Fig. 1, außer dass der Kompensationsstrompfad 18 in Fig. 4 ausgangsseitig an die Ausgangsleitung 8 angeschlossen ist. Die grundsätzliche Funktion des Kompensationsstrompfads 18 gemäß Fig. 4 entspricht aber derjenigen gemäß Fig. 1.

Dies gilt auch für die Ausführungsform des Kompensationsstrompfads 18 gemäß **Fig. 5**. Hier sind nicht die beiden Schalter S₇ und S₈ auf zwei Brücken zwischen den Eingangsleitungen 6 und 7 verteilt, sondern die Kopplungskapazität C_{K} ist in zwei Kopplungskapazitäten C_{K1} und C_{K2} aufgeteilt. Dies entspricht der kapazitiven Kopplung des Kompensationsstrompfads 18 ausgangsseitig der Induktivität Lₑ mit einem Potential, das zwischen den Potentialen der Eingangleitungen 6 und 7 liegt. Auch die Kapazität Cₑ, über die der Kompensationsstrompfad 18 ausgangsseitig an die Ausgangsleitungen 8 und 9 angeschlossen ist, ist hier in zwei Kapazitäten Cₑ₁ und Cₑ₂ aufgeteilt, was dem Anschluss an ein Potential zwischen den Potentialen der Ausgangsleitungen 8 und 9 unter Zwischenordnung einer Kapazität entspricht. Es versteht sich, dass die Aufteilung der beiden Kapazitäten C_{K} und Cₑ auch unabhängig voneinander vorgenommen werden kann und dass eine oder beide entsprechenden Aufteilungen auch bei den anderen Ausführungsformen des Kompensationsstrompfads 18 gemäß den Fig. 1 bis 4 möglich ist.

### BEZUGSZEICHENLISTE

- 1: Wechselrichter
- 2: Gleichstromquelle
- 3: Photovoltaikpaneel
- 4: Wechselstromnetz
- 5: DC/DC-Wandler
- 6: Eingangsleitung
- 7: Eingangsleitung
- 8: Eingangsleitung
- 9: Eingangsleitung
- 10: Wechselrichterbrücke
- 11: Sinusfilter
- 12: Resonanzkreis
- 13: Wechselstromrückflusspfad
- 14: Resonanzkreis
- 15: SEPIC
- 16: Wechselstromvorwärtspfad
- 17: Hilfswandler
- 18: Kompensationsstrompfad
- 19: Ferritring
- 20: Steuerung

## Patentansprüche

1. DC/DC-Wandler (5), der eine zwischen zwei Eingangsleitungen (6 und 7) anliegende Eingangsgleichspannung (U_{E}) in eine zwischen zwei Ausgangsleitungen (8 und 9) anliegende Ausgangsgleichspannung (U_{Z}) umwandelt, wobei die Eingangsleitungen (6 und 7) und die Ausgangsleitungen (8 und 9) durch Kapazitäten (Cᵣ₁, Cᵣ₂), die in alle Wechselstromvorwärts-und -rückflusspfaden (13) geschaltet sind, galvanisch voneinander getrennt sind, **dadurch gekennzeichnet, dass** ein Hilfswandler (17) vorgesehen ist, der einen über alle Wechselstromvorwärts- und -rückflusspfade (13) abfließenden Strom kompensiert, indem er einen Kompensationsstrompfad (18), der parallel zu allen Wechselstromvorwärts- und -rückflusspfaden (13) verläuft, über zwei getaktete Schalter (S₇, S₈ bzw. S₉, S₁₀) wechselweise mit je einer der Eingangsleitungen (6, 7) oder wechselweise mit je einer der Ausgangsleitungen (8 und 9) elektrisch leitend verbindet, wobei der Kompensationsstrompfad (18) auf seiner den getakteten Schaltern (S₇, S₈; S₉, S₁₀) gegenüberliegenden Seite über mindestens eine Kapazität (Cₑ) mit mindestens einer der Ausgangsleitungen (8, 9) oder einer ein dazwischen liegendes Potential führenden Zwischenpotentialleitung bzw. einer der Eingangsleitungen (6, 7) oder einer ein dazwischen liegendes Potential führenden Zwischenpotentialleitung verbunden ist.

2. DC/DC-Wandler nach Anspruch 1, **dadurch gekennzeichnet, dass** in dem Kompensationsstrompfad (18) eine mit der Kapazität (Cₑ) in Reihe geschaltete Induktivität (Lₑ) vorgesehen ist.

3. DC/DC-Wandler nach Anspruch 1 oder 2, **dadurch gekennzeichnet, dass** der Kompensationsstrompfad (18) auf der Seite mit den getakteten Schaltern (S₇, S₈; S₉, S₁₀) über eine Kopplungskapazität (C_{K}) mit einer der Eingangsleitungen (6, 7) bzw. einer der Ausgangsleitungen (8, 9) oder einer ein dazwischen liegendes Potential führenden Zwischenpotentialleitung verbunden ist.

4. DC/DC-Wandler nach Anspruch 2 und 3, **dadurch gekennzeichnet, dass** die Kopplungskapazität (C_{K}) zwischen der Induktivität (Lₑ) und der Kapazität (Cₑ) an den Kompensationsstrompfad (18) angeschlossen ist, wobei die Induktivität (Lₑ) zwischen den getakteten Schaltern (S₇, S₈; S₉, S₁₀) und der Kapazität (Cₑ) liegt.

5. DC/DC-Wandler nach einem der Ansprüche 1 bis 4, **dadurch gekennzeichnet, dass** eine Steuerung (20) des Hilfswandlers (17) einen über allen Wechselstromvorwärts- und - rückflusspfaden (13) sowie den Kompensationsstrompfad (18) abfließenden Strom gegen null regelt.

6. DC/DC-Wandler nach Anspruch 5, **dadurch gekennzeichnet, dass** die Steuerung (20) die getakteten Schalter (S₇, S₈; S₉, S₁₀) des Hilfswandlers (17) mit Pulweitenmodulation (PWM) ansteuert.

7. DC/DC -Wandler nach einem der Ansprüche 1 bis 5, **dadurch gekennzeichnet, dass** der DC/DC-Wandler (5) als Wechselstromvorwärtspfad mindestens einen eine Resonanzinduktivität (Lᵣ₁) und eine Resonanzkapazität (Cᵣ₁) aufweisenden Resonanzkreis (12) umfasst, der eingangsseitig über mindestens zwei getaktete Schalter (S₁ und S₂) jeweils mit einer der beiden Eingangsleitungen (6 und 7) elektrisch leitend verbindbar ist.

8. DC/DC-Wandler nach einem der Ansprüche 1 bis 6, **dadurch gekennzeichnet, dass** mindestens ein Wechselstromrückflusspfad (13) eingangsseitig mit den Eingangsleitungen (6 und 7) und ausgangsseitig mit den Ausgangsleitungen (8 und 9) elektrisch leitend verbunden oder verbindbar ist, wobei die Kapazität (Cᵣ₂) in dem Wechselstromrückflusspfad (13) zwischen seiner eingangsseitigen Verzweigung zu den Eingangsleitungen (6 und 7) und seiner ausgangsseitigen Verzweigung zu den beiden Ausgangsleitungen (8 und 9) angeordnet ist.

9. DC/DC-Wandler nach Anspruch 7, **dadurch gekennzeichnet, dass** jedem Resonanzkreis (12) ein Wechselstromrückflusspfad (13) zugeordnet ist, der eingangsseitig und ausgangsseitig mit denselben Leitungen (6, 7, 8, 9) elektrisch leitend verbunden oder verbindbar ist, mit denen der zugehörige Resonanzkreis (12) elektrisch leitend verbindbar ist.

10. DC/DC-Wandler nach Anspruch 7 oder 8, **dadurch gekennzeichnet, dass** der Wechselstromrückflussrückpfad (13) eingangsseitig mit den Eingangsleitungen (6 und 7) über zwei Kapazitäten und ausgangsseitig mit den Ausgangsleitungen (8 und 9) über zwei weitere Kapazitäten verbunden ist.

11. DC/DC-Wandler nach Anspruch 9, **dadurch gekennzeichnet, dass** mehrere Wechselstromrückflussrückpfade (13) ausgangsseitig über dieselben zwei Kapazitäten mit den Ausgangsleitungen (8 und 9) verbunden sind.

12. DC/DC-Wandler nach Anspruch 7 oder 8, **dadurch gekennzeichnet, dass** der Wechselstromrückflusspfad (13) eingangsseitig wechselweise mit den Eingangsleitungen (6 und 7) und/oder ausgangsseitig wechselweise mit den Ausgangsleitungen (8 und 9) über zwei Schalter (S₃ und S₄) und auf der anderen Seite mit den Ausgangsleitungen (8 und 9) bzw. den Eingangsleitungen (6 und 7) über zwei weitere Schalter und/oder Dioden (D₃, D₄) elektrisch leitend verbindbar ist, wobei der Wechselstromrückflusspfad (13) als weiterer Resonanzkreis (14) ausgebildet ist und neben der Kapazität (Cᵣ₂) eine Resonanzinduktivität (Lᵣ₂) aufweist.

13. DC/DC-Wandler nach Anspruch 8 oder einem der voranstehenden, auf Anspruch 8 rückbezogenen Ansprüche, **dadurch gekennzeichnet, dass** zwischen jedem Resonanzkreis (12) und dem ihm zugeordneten Wechselstromrückflusspfad (13) eingangsseitig nach ihrer Verzweigung zu den Eingangsleitungen (6 und 7) und/oder ausgangsseitig vor ihrer Verzweigung zu den beiden Ausgangsleitungen (8 und 9) mindestens ein getakteter Verbindungsschalter vorgesehen ist.

14. DC/DC-Wandler nach Anspruch 8 oder einem der voranstehenden, auf Anspruch 8 rückbezogenen Ansprüche, **dadurch gekennzeichnet, dass** jeder Resonanzkreis (12) und der zugehörige Wechselstromrückflusspfad (13) ausgangsseitig vor ihrer Verzweigung zu den beiden Ausgangsleitungen (8 und 9) durch eine Kapazität und/oder Induktivität miteinander verbunden sind.

15. DC/DC-Wandler nach Anspruch 11, **dadurch gekennzeichnet, dass** jeder Resonanzkreis (12) und der zugehörige Wechselstromrückflusspfad (13) eingangsseitig über zwei getaktete Schalter (S₁ und S₂, S₃ und S₄) jeweils mit einer der beiden Eingangsleitungen (6 und 7) elektrisch leitend verbindbar sind, wobei in einer Eingangsleitung (6 oder 7) oder Zwischenpotentialeingangsleitung (16) ein weiterer getakteter Schalter vorgesehen ist.
